# EUROPEAN PATENT SPECIFICATION

(11) **EP 1 115 554 B1**
(45) Date of publication and mention of the grant of the patent: **09.04.2003**
(21) Application number: 99946441.5
(22) Date of filing: 17.09.1999
(51) Int. Cl.: B29C 65/20, B29C 65/78, B23K 37/053

(54) **APPARATUS FOR WELDING TUBES**
ROHRSCHWEISSEINRICHTUNG
APPAREIL POUR SOUDER DES TUBES

(30) Priority: 18.09.1998 IT RM980606
(43) Date of publication of application: 18.07.2001
(73) Proprietor: MEIRANA, Giovanni, 17052 Borghetto Santo Spirito, Savona (IT)
(72) Inventor: MEIRANA, Giovanni, I-17052 Borghetto Santo Spirito (IT)
(74) Representative: Iannone, Carlo Luigi
(86) International application number: IT9900293
(87) International publication number: WO00016967

(56) References cited:
- WO-A-98/24613
- DE-A- 2 119 251
- DE-A- 2 313 382
- DE-A- 2 805 985
- FR-A- 2 308 486
- FR-A- 2 562 985
- FR-A- 2 753 650
- US-A- 3 723 229
- US-A- 3 846 208
- US-A- 4 533 424
- US-A- 4 542 892

## Description

The present invention concerns an apparatus for welding tubes.

This apparatus allows to carry out weldings between two plastic tubes, either to weld pipe fittings or to weld head tubes, substantially defect free, in such a way to guarantee optimum features of the same weld.

The problem of welding plastic tubes, and particularly the welding of deviation pipe fittings on a main tube, independently from the dimensions, is very important and has practically unsolved, at least as to the obtainment of a welding having optimum features.

In fact, on the market many apparatuses exist to carry out this kind of weldings, none of them being able to guarantee a welding without defects.

In fact, in most cases, known apparatuses are realised in such a way to not induce deformations of the elements to be welded, or not to guarantee the respect of the proper positioning during the welding.

FR - A - 2308486 describes a device for the head welding of thermoplastic elements. DE 2313382 A describes a welding system for plastic tubes.

Until a historical period, this kind of imprecision, that can partly be compensated by the skillness of the operator, even constituting a problem, was not deemed to be substantial, since the same weldings, particularly the weldings of the deviations, were intrinsically defective.

In fact, before the filing of the Italian patent N° 1,231,685 on May, 18, 1989, assigned to the same applicant, deviation had a circular section, so that welding obtained were in any case defective.

With the structure of the new pipe fittings, sold on the market by the same applicant, it has been possible to obtain structurally perfect weldings, but in this case apparatuses presently available on the market does not allow to exploit at best the features of the pipe fittings.

In view of the above, the Applicant has realised an apparatus allowing to carry out any kind of welding, i.e. head, 90° or 45° weldings, having substantially perfect structural features.

It is the object of the present invention that of providing an apparatus solving all the problems of the known apparatuses, allowing to have a constant height of the welding surface, to carry out both deviation and head weldings and to carry out weldings in any position of the tube, without any obstacle by the same apparatus.

This object is achieved according to the present invention by an apparatus for welding tubes, comprising a frame, a tube resting zone , clamp means to block the tube in the welding position, said clamp means being comprised of two halves partially surrounding the tube and are eventually provided with adapter means for different diameters of the tube, the tube of any dimension being supported with its welding surface placed always at the same pre-established height, a welding mirror, provided with means for fixing an upper matrix and a lower matrix, and provided with support means to approach and to move away the tubes to be welded, allowing its displacement along the horizontal plane and along the vertical plane, with the possibility of combining the two motions to obtain a continuous adjustment on the three axis, with any orientation, clamp means to support the tube to be welded, said clamp means being adaptable to any dimension of the tube to be welded, and being vertically slidable along said frame.

Particular embodiments of the invention are subject of the dependents claims.

Preferably, said frame is offset with respect to the tube on which the welding is carried out.

According to a particularly preferred embodiment of the present invention, said clamp means are comprised of a pair of clamps, each one comprising two openable and closable halves to clamp the tube, said halves being comprised of different circle arches and coupling with the tube in such a way to close and upper portion of the half of the circumference.

According to another embodiment of the invention, said adapting means are comprised of two halves, corresponding to the halves of said clamp means, and having a centre of the tube in a variable position, in such a way to keep the welding surface always at the same level.

Still according to another embodiment of the invention, said means for fixing the upper and lower matrixes on said welding mirror can be provided with means for adjusting the position of the matrixes.

Furthermore, according to another embodiment of the invention, said support means of the welding mirror can be comprised of a first pair of side horizontal guides, allowing the sliding of the mirror, with an independent positioning with respect to the horizontal plane, and a second pair of side vertical guides, allowing the sliding of the mirror, with an independent positioning with respect to the vertical plane.

Further, according to another embodiment of the invention, said mirror can be provided with independent lateral counterweights, preferably having a variable weight.

Still according to another embodiment of the invention, said clamp means can slide vertically, along at least one vertical guide, driven by a oleodynamic, pneumatic, hydropneumatic, etc, actuator.

Furthermore, said sliding guides for the clamp means can be the same or different with respect to the side vertical sliding guides of the welding mirror.

Preferably, said clamp means can be comprised of two clamps, movable along a horizontal plane, symmetrically with respect to the tube to be clamped, and shaped in such a way to adapt to different diameters of the tube.

Further, adjustment means for the position of the same clamp after the clamping of the tube can be provided on said clamp means, said adjustment means being preferably comprised of elastic means provided with lever blocking means.

According to another embodiment of the invention, a drilling machine can be provided to hole the welding zone after the completion of the lateral welding.

According to another embodiment of the invention, said drilling machine and said clamp means can be provided on separated supports or on a rotatable support, in such a way to alternatively bring the two tools in an operative position.

Contrast means can be further provided on said drilling machine to contrast the action of the drilling machine during the holing action.

The present invention will be now described, for illustrative but not limitative purposes, according to its preferred embodiments, with particular reference to the figures of the enclosed drawings, wherein:
Figure 1 is a lateral view of an embodiment of the apparatus according to the invention;

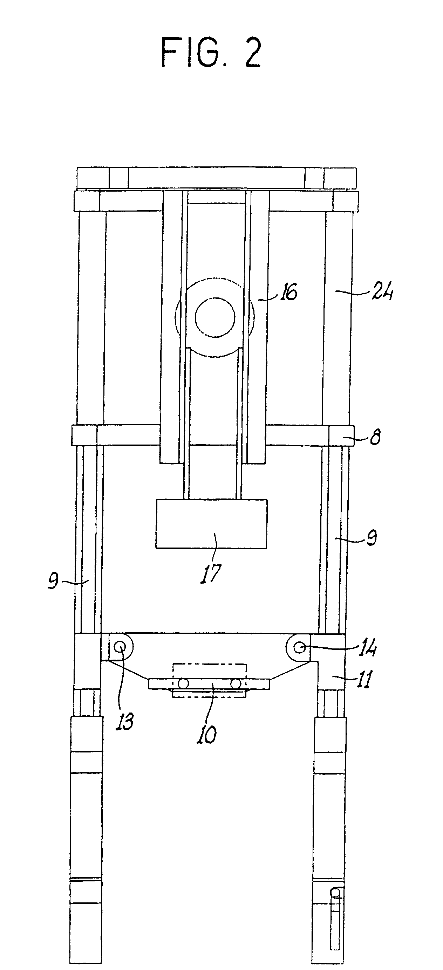

figure 2 is a front view of the apparatus of figure 1;
figure 3 shows a particular of the apparatus of figure 1;
figure 4 is a lateral view of the particular of figure 3; and
figure 5 schematically shows the motion system of the mirror of the apparatus according to the invention.

Observing the figures of the enclosed drawings, it is shown an embodiment of the apparatus according to the invention.

Apparatus 1 provides a support 2 for the main tube on which the welding must be carried out, realised in such a way to be able to freely rest the tube 3 without any limitation of the length of the same tube. As already mentioned, the apparatus 1 can also provide lateral supports to support tube 3.

A clamp 4 is provided on said support 2 to clamp the tube, said clamp being comprised of two parts, respectively 4' and 4".

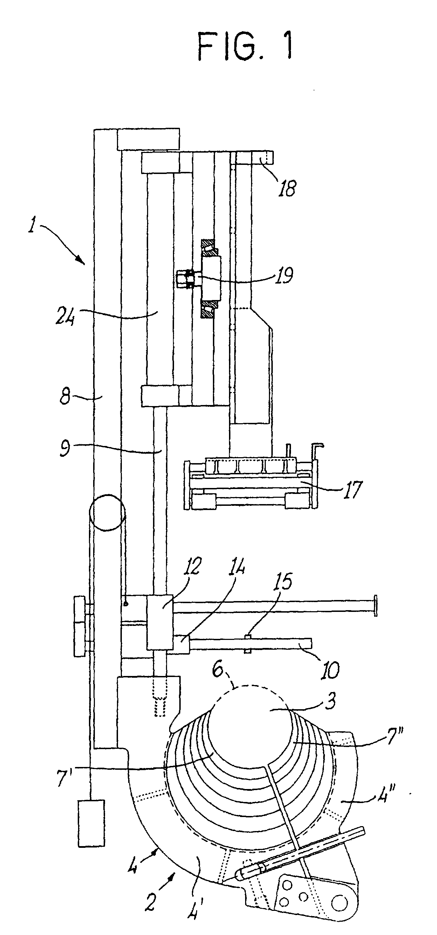

As it can be particularly noted from figure 1, clamp 4 is realised in a particular way to allow the clamping of the tube 4 without any deformation of the same.

To this end, clamp 4 clamps the tube 3 beyond its half line, without closing it completely, with the two halves 4' and 4" of the clamp 4 not symmetric, even if the mobile part 4" is smaller than the fixed part 4'.

A pin 5 is provided to fix the two parts 4' and 4" of the clamp 4.

Tube 5 supported on the support 2 and clamped by the clamp 4 has a welding surface 6 positioned at a constant height. In fact, even if adapters 7 are used, said adapters being comprised of two parts 7' and 7", they are shaped in such a way that the tube 3 having a corresponding diameter has its welding surface always at the level indicated by the reference number 6.

This solution allows to obtain a welding solution much more precise and constant, eliminating many of the defects of the known apparatuses.

On the elements 7' and 7" of the adapters 7, means, not shown, are provided, e.g. comprised of grooves and pins, to fix them each other without any relevant motion during the clamping.

On the main frame 8 of the apparatus according to the invention, two side vertical guides 9 are provided to vertically move, in an independent manner, the welding mirror 10 by slidable supports.

In the solution suggested according to the present invention, frame 8 is offset with respect to the tube 3, thus completely freeing the working zone.

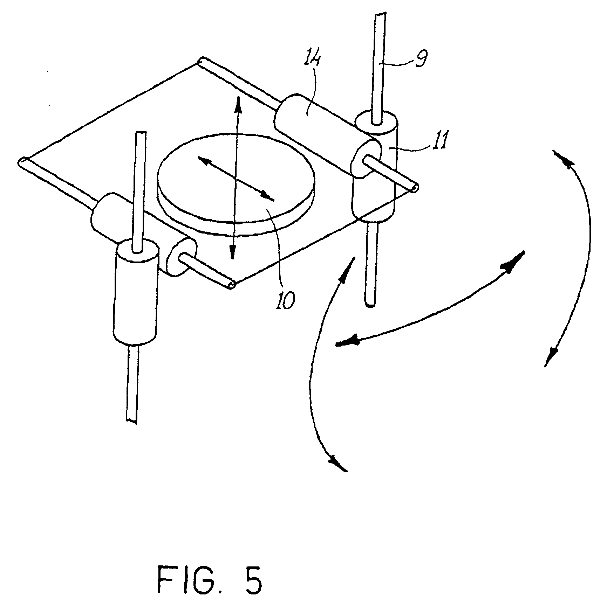

Furthermore, mirror 10 (as it can be better noted from figure 5), is mounted on two horizontal axis 13, on which the supports 14 slide, for the independent motion along the horizontal plane of the mirror 10. Laterally with respect to the mirror, two independent counterweights (not shown) are provided, having a weight slightly bigger than the weight of the mirror 10 and of the upper and lower matrixes. As already mentioned, the two counterweights can have a variable weight, in function of the matrixes used.

With this kind of support, it is possible to carry out any adjustment of the mirror 10, before beginning the welding, in order to obtain an optimum positioning of the elements to be welded.

Matrixes (not shown) are mounted on the mirror 10, their position on the mirror being adjustable by the guides 15.

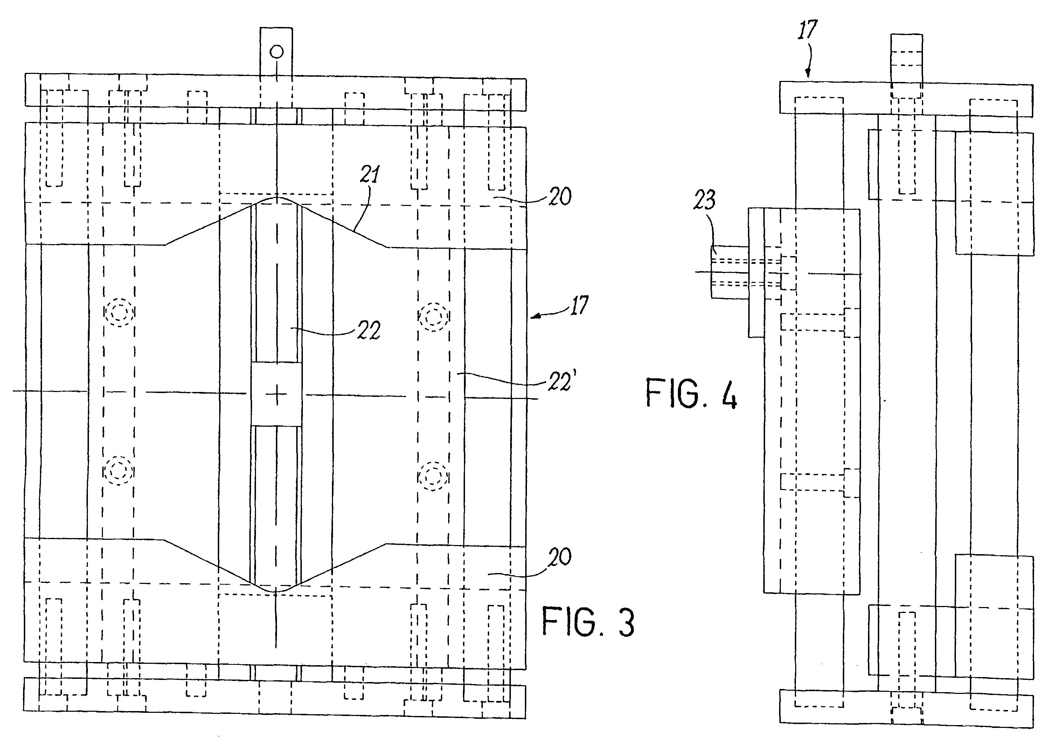

Always on the frame 8, a group 16 is provided, slidable along the guides 9, said group 16 bridging to the clamp 17 (that can be particularly seen from figures 3 and 4) and the drilling machine 18. In fact, said group 18 can rotate about the pin 19 and slides by hydraulic actuators 24.

Said clamp 17, see also figures 3 and 4, provides two lateral symmetric clamps 20, having a central groove 21, to clamp the derivation tube to be welded, independently from the dimension of the same tube, slidable along the screw 22 and the guides 22'. In this way, a tightening is obtained without deforming the tube.

Furthermore, said clamp 17 provides a further precision adjustment system comprising four springs, not shown, and a fixing lever 23, to be used after the clamping of the tube and its positioning on the matrix.

Obviously, even if the solution shown in the figures provides drilling machine 18 and clamp 17 supported by a sole rotatable group, it is evident that they can be also provided in a different manner, without modifying the inventive concept.

The drilling machine 18 can also provide elastic contrast means (not shown) to contrast its action during the perforation of the joint.

Apparatus 1 according to the invention is structured in such a way to allow to freely carry out weldings with any orientation, without any obstacle.

Furthermore, there is no limit to the length of the tube to be welded.

When it is necessary to carry out a welding using the apparatus according to the invention, after having chosen the adapter suitable for the tube 3 on which the welding is carried out, the upper and lower matrixes are fixed on the mirror 10 with an eventual adjustment of their position by the guides 15, and it is fixed the tube to be welded in the clamp 17.

Now, acting on the guides 12 and 14, the mirror is approached to the tube 3 to verify the proper coupling, and thus the same step is carried out approaching the clamp 17 to the upper matrix coupled with the mirror 10 and carrying out eventual further adjustments on the clamp 17 by the springs (not shown) and the lever 23.

When the apparatus 1 according to the invention is started, the various elements are brought in the rest position, and the mirror is heated until reaching the suitable and necessary welding temperature.

Now the mirror 10 is approached to the tube 3 until perfectly matching the lower matrix, acting of the adjustment systems of the same mirror 10.

However, just in view of the presence of the counterweights, it is possible to approach the mirror 10 to the tube clamped by the clamp 17, and thus lower the clamp 17, and consequently the mirror 10 along with the lower matrix, to the tube 3, the motion shown in the figure allowing a almost perfect approaching.

Then the clamp 17, bearing the tube to be welded, is approached to the upper matrix, and the it necessary to wait for the time needed to fuse the material comprising the two tubes.

After this period, the mirror along the matrixes is withdrawn and the two tubes are coupled, eventually adjusting their position one with respect to the other.

An absolutely symmetrical and without any displacement due to deformations of the two tubes and to movements of the two elements one with respect to the other, welding is obtained.

The clamp 17 is then opened and withdrawn, and after the rotation of the group 16 about the pin 19, the perforation of the joint by the drilling machine 18 is carried out.

The present invention has been described for illustrative but not limitative purposes, according to its preferred embodiments, but it is to be understood that modifications and/or changes can be introduced by those skilled in the art without departing from the scope of the enclosed claims.

## Claims

1. Apparatus for welding tubes, comprising a frame (8), a tube resting zone (2), clamp means (4) to block the tube (3) in the welding position, said clamp means (4) being comprised of two halves (4', 4") partially surrounding the tube (3) and are eventually provided with adapter means (7) for different diameters of the tube, the tube (3) of any dimension being supported with its welding surface (6) placed always at the same pre-established height, a welding mirror (10), provided with means for fixing an upper matrix and a lower matrix, and provided with support means (12, 13, 14, 15) to approach and to move away the tubes to be welded, allowing its displacement along the horizontal plane and along the vertical plane, with the possibility of combining the two motions to obtain a continuous adjustment on the three axis, with any orientation, clamp means (17) to support the tube to be welded, said clamp means (4) being adaptable to any dimension of the tube (3) to be welded, and being vertically slidable along said frame (8).

2. Apparatus according to claim 1, whereby said frame (8) is offset with respect to the tube (3) on which the welding is carried out.

3. Apparatus according to claim 1 or 2, whereby clamp means (4) are comprised of a pair of clamps, each one comprising two openable and closable halves (4', 4") to clamp the tube (3), said halves (4', 4") being comprised of different circle arches and coupling with the tube (3) in such a way to close and upper portion of the half of the circumference.

4. Apparatus according to one of the preceding claims, whereby said adapting means (7) are comprised of two halves (7', 7"), corresponding to the halves of said clamp means (4), and having a centre of the tube (3) in a variable position, in such a way to keep the welding surface always at the same level.

5. Apparatus according to one of the preceding claims, whereby said means for fixing the upper and lower matrixes on said welding mirror (10) are provided with means (15) for adjusting the position of the matrixes.

6. Apparatus according to one of the preceding claims, whereby said support means (14) of the welding mirror (10) are comprised of a first pair of side horizontal guides (13), allowing the sliding of the mirror (10), with an independent positioning with respect to the horizontal plane, and a second pair of side vertical guides (9), allowing the sliding of the mirror (10), with an independent positioning with respect to the vertical plane.

7. Apparatus according to one of the preceding claims, whereby said mirror (10) is provided with independent lateral counterweights.

8. Apparatus according to claim 7, whereby said counterweights have a variable weight.

9. Apparatus according to one of the preceding claims, whereby said clamp means (4) slide vertically, along at least one vertical guide, driven by an oil-hydraulic, pneumatic or hydropneumatic actuator.

10. Apparatus according to one of the preceding claims, whereby said sliding guides (9) for the clamp means (4) are the same or different with respect to the side vertical sliding guides (9) of the welding mirror (10).

11. Apparatus according to one of the preceding claims, whereby said clamp means (4) are comprised of two clamps (4', 4"), movable along a horizontal plane, symmetrically with respect to the tube (3) to be clamped, and shaped in such a way to adapt to different diameters of the tube (3).

12. Apparatus according to one of the preceding claims, whereby adjustment means for the position of the same clamp after the clamping of the tube are provided are on said clamp means, said adjustment means being preferably comprised of elastic means provided with lever blocking means (23).

13. Apparatus according to one of the preceding claims, whereby a drilling machine is provided to hole the welding zone after the completion of the lateral welding.

14. Apparatus according to one of the preceding claims, whereby said drilling machine and said clamp means are provided on separated supports or on a rotatable support, in such a way to alternatively bring the two tools in an operative position.

15. Apparatus according to one of the preceding claims, whereby contrast means are further provided on said drilling machine to contrast the action of the drilling machine during the holing action.

## Patentansprüche

1. Vorrichtung zum Verschweißen von Rohren, mit einem Rahmen (8), einer Rohrauflagezone (12), einer Klammer (4) zum Festhalten des Rohres (3) in Schweißposition, wobei die Klammer (4) aus zwei Hälften (4',4") besteht, welche das Rohr teilweise umgeben und schließlich mit einer Adaptervorrichtung (7) für verschiedene Rohrdurchmesser versehen sind, wobei ein Rohr (3) irgendeines Durchmessers so gehalten wird, dass seine Schweißoberfläche (6) immer dieselbe voreingestellte Höhe einnimmt, mit einem Schweißspiegel (10), der mit Mitteln zur Fixierung einer oberen Matrix und einer unteren Matrix sowie mit einer Halterung (12,13,14,15) versehen ist, mit welcher die zu verschweißenden Rohre aufeinander zu und voneinander weg bewegbar sind, und welche ihre Verschiebung längs einer Horizontalebene und längs einer Vertikalebene erlaubt mit der Möglichkeit der Kombinierung der beiden Bewegungen, um eine kontinuierliche Justierung in den drei Achsen mit jeglicher Orientierung zu erreichen, und mit einer Klammer (17) zur Halterung des zu verschweißenden Rohres, wobei die Klammer (4) sich für jegliche Dimension des zu schweißenden Rohres (3) eignet und vertikal längs des Rahmens (8) gleiten kann.

2. Vorrichtung nach Anspruch 1, bei welcher der Rahmen (8) gegenüber dem Rohr (3), an welchem die Verschweißung auszuführen ist, versetzt ist.

3. Vorrichtung nach Anspruch 1 oder 2, bei welcher die Klammer (4) aus einem Paar von Klemmen besteht, deren jede zwei öffen- und schließbare Hälften (4',4") aufweist, um das Rohr (3) festzuklemmen, wobei die Hälften (4',4") aus verschiedenen Kreisbögen bestehen und mit dem Rohr (2) derart koppelbar sind, dass ein oberer Abschnitt der Hälfte des Umfangs geschlossen wird.

4. Vorrichtung nach einem der vorstehenden Ansprüche, bei welcher die Adaptervorrichtung (7) aus zwei Hälften (7',7") besteht, welche den Hälften der Klammer (4) entsprechen und die Mitte des Rohres (3) in einer veränderbaren Position derart halten, dass die Schweißoberfläche sich immer auf derselben Höhe befindet.

5. Vorrichtung nach einem der vorstehenden Ansprüche, bei welcher die Mittel zum Fixieren der oberen und unteren Matrix auf dem Schweißspiegel (10) mit Justiermitteln (15) versehen sind, um die Position der Matrizen einzustellen.

6. Vorrichtung nach einem der vorstehenden Ansprüche, bei welcher die Halterung (14) des Schweißspiegele (10) aus einem ersten Paar horizontaler Seitenführungen (13), welche ein Verschieben des Spiegels (10) mit unabhängiger Positionierung bezüglich der Horizontalebene erlauben, sowie aus einem zweiten Paar vertikaler Seitenführungen (9), die ein Verschieben des Spiegels (10) mit unabhängiger Positionierung bezüglich der Vertikalebene erlauben, bestehen.

7. Vorrichtung nach einem der vorstehenden Ansprüche, bei welcher der Spiegel (10) mit unabhängigen seitlichen Gegengewichten versehen ist.

8. Vorrichtung nach Anspruch 7, bei welcher die Gegengewichte ein variables Gewicht haben.

9. Vorrichtung nach einem der vorstehenden Ansprüche, bei welcher die Klammer (4) unter Antrieb durch einen ölhydraulischen, pneumatischen oder hydropneumatischen Aktuator vertikal längs mindesteris einer Vertikalführung verschiebbar ist.

10. Vorrichtung nach einem der vorstehenden Ansprüche, bei welchem die Gleitführungen (9) für die Klammer (4) bezüglich der vertikalen Seitengleitführungen (9) des Schweißspiegels (10) die gleichen oder verschiedene sind.

11. Vorrichtung nach einem der vorstehenden Ansprüche, bei welcher die Klammer (4) aus zwei Teilklammern (4',4") bestehen, die längs einer horizontalen Ebene bewegbar sind, bezüglich des festzuklemmenden Rohres (3) symmetrisch sind und derart geformt sind, dass sie sich unterschiedlichen Durchmessern des Rohres (3) anpassen.

12. Vorrichtung nach einem der vorstehenden Ansprüche, bei welcher auf der Klammer Justiermittel für die Position derselben Klammer nach dem Festklemmen des Rohres vorgesehen sind und vorzugsweise aus elastischen Elementen bestehen, die mit Hebelblockiermitteln (23) versehen sind.

13. Vorrichtung nach einem der vorstehenden Ansprüche, bei welcher eine Bohrmaschine vorgesehen ist, um die Schweißzone nach Beendigung des seitlichen Verschweißens auszubohren.

14. Vorrichtung nach einem der vorstehenden Ansprüche, bei welcher die Bohrmaschine und die Klammer auf getrennten Halterungen oder auf einer drehbaren Halterung derart angebracht sind, dass die beiden Werkzeuge abwechselnd in Arbeitsposition gebracht werden können.

15. Vorrichtung nach einem der vorstehenden Ansprüche, bei welcher auf der Bohrmaschine ferner Kontrastmittel vorgesehen sind, um die Aktion der Bohrmaschine während des Ausbohrens zu kontrastieren.

## Revendications

1. Appareil pour souder des tubes, comprenant un cadre (8), une zone de dépose des tubes (2), un moyen de serrage (4) permettant de bloquer le tube (3) en position de soudage, ledit moyen de serrage (4) étant composé de deux moitiés (4', 4'') entourant partiellement le tube (3) et étant éventuellement muni d'un moyen adaptateur (7) pour différents diamètres de tube, le tube (3) de toute dimension étant supporté, sa surface de soudage (6) étant toujours placée à la même hauteur pré-établie, un miroir de soudage (10) muni d'un moyen de fixation d'une matrice supérieure et d'une matrice inférieure, et muni de moyens de support (12, 13, 14, 15) permettant de rapprocher et d'éloigner les tubes devant être soudés, permettant leurs déplacements dans le plan horizontal et dans le plan vertical, avec la possibilité de combiner les deux mouvements afin d'obtenir un ajustement continu sur les trois axes, selon n'importe quelle orientation, un moyen de serrage (17) permettant de supporter le tube devant être soudé, ledit moyen de serrage (4) pouvant être adapté à n'importe quelle dimension du tube (3) devant être soudé, et pouvant coulisser verticalement le long dudit cadre (8).

2. Appareil selon la revendication 1, dans lequel ledit cadre (8) est décalé par rapport au tube (3) sur lequel le soudage doit être exécuté.

3. Appareil selon la revendication 1 ou 2, dans lequel le moyen de serrage (4) est constitué d'une paire de pinces, chacune d'elles comprenant deux moitiés (4', 4'') pouvant s'ouvrir et se fermer afin de pincer le tube (3), lesdites moitiés (4', 4'') étant constituées de différents arcs de cercles et s'accouplant au tube (3) de façon à fermer une portion supérieure de la moitié de la circonférence.

4. Appareil selon l'une quelconque des revendications précédentes, dans lequel ledit moyen d'adaptation (7) est composé de deux moitiés (7', 7''), qui correspondent aux moitiés dudit moyen de serrage (4), et ayant un centre de tube (3) en position variable, de façon à maintenir la surface de soudage toujours au même niveau.

5. Appareil selon l'une quelconque des revendications précédentes, dans lequel ledit moyen de fixation des matrices supérieure et inférieure sur ledit miroir de soudage (10) est muni d'un moyen d'ajustement (15) de la position des matrices.

6. Appareil selon l'une quelconque des revendications précédentes, dans lequel ledit moyen de support (14) du miroir de soudage (10) est constitué d'une première paire de guides horizontaux latéraux (13) qui permettent le coulissement du miroir (10), avec un placement indépendant par rapport au plan horizontal, et une seconde paire de guides verticaux latéraux (9), permettant le coulissement du miroir (10), avec un placement indépendant par rapport au plan vertical.

7. Appareil selon l'une quelconque des revendications précédentes, dans lequel ledit miroir (10) est muni de contrepoids latéraux indépendants.

8. Appareil selon l'une quelconque des revendications précédentes, dans lequel lesdits contrepoids ont un poids variable.

9. Appareil selon l'une quelconque des revendications précédentes, dans lequel ledit moyen de serrage (4) coulisse verticalement, le long d'au moins un guide vertical, entraîné par un actionneur hydropneumatique, pneumatique ou hydraulique à huile.

10. Appareil selon l'une quelconque des revendications précédentes, dans lequel lesdits guides de coulissement (9) pour le moyen de serrage (4) sont les mêmes que, ou sont différents des guides de coulissement verticaux latéraux (9) du miroir de soudage (10).

11. Appareil selon l'une quelconque des revendications précédentes, dans lequel ledit moyen de serrage (4) est constitué de deux pinces (4', 4'') qui peuvent se déplacer dans un plan horizontal, symétriquement par rapport au tube (3) devant être serré, et formées de façon à s'adapter aux différents diamètres de tube (3).

12. Appareil selon l'une quelconque des revendications précédentes, dans lequel ledit moyen d'ajustement pour la position de ladite pince, après le serrage du tube, est fourni sur ledit moyen de serrage, ledit moyen d'ajustement étant, de préférence, constitué d'un moyen élastique muni d'un moyen de blocage du levier (23).

13. Appareil selon l'une quelconque des revendications précédentes, dans lequel une perceuse est fournie pour percer la zone de soudage après la fin du soudage latéral.

14. Appareil selon l'une quelconque des revendications précédentes, dans lequel ladite perceuse et ledit moyen de serrage sont fournis sur des supports séparés ou sur un support rotatif, de façon à amener, alternativement, les deux outils en position de fonctionnement.

15. Appareil selon l'une quelconque des revendications précédentes, dans lequel un moyen de contraste est, en outre, fourni sur ladite perceuse pour faire le contraste avec l'action de la perceuse, au cours du perçage.
